# EUROPÄISCHE PATENTANMELDUNG

(11) **EP 1 523 884 A1**
(43) Veröffentlichungstag der Anmeldung: **20.04.2005**
(21) Anmeldenummer: 04024623.3
(22) Anmeldetag: 15.10.2004
(51) Int. Cl.: A01K 13/00

(54) **Hundewaschvorrichtung**

(30) Priorität: 15.10.2003 IT PD20030246
(71) Anmelder: Mason, Sergio, 35010 Trebaseleghe (PD) (IT)
(72) Erfinder: Mason, Sergio, 35010 Trebaseleghe (PD) (IT)
(74) Vertreter: Zeitler, Giselher, Dipl.-Ing.

(57) **Zusammenfassung**

Bei einer Vorrichtung zur Behandlung von Tieren, insbesondere von Hunden, insbesondere zum Waschen, zum Trocknen, zum Verabreichen von Essenzen, Medikamenten u. dgl., ist die Anordnung derart getroffen, daß in einem Gehäuse (18) eine Trägerebene (10) für das zu behandelnde Tier (11) vorgesehen ist, die derart angeordnet ist, daß der Kopf (12) des auf der Trägerebene (10) stehenden Tieres (11) aus einer stirnseitigen Öffnung (21) des Gehäuses (18) herausragt, und daß im Innern des Gehäuses (18) im Abstand über der Trägerebene (10) eine Behandlungsbrücke (26) längsverfahrbar ist, die mit mehreren nach innen gerichteten Behandlungsdüsen (24, 19) verschiedener Art bestückt ist.

## Beschreibung

Die Erfindung betrifft eine Vorrichtung zur Behandlung von Tieren, insbesondere von Hunden, gemäß dem Oberbegriff des Anspruchs 1.

Es sind bereits automatische Vorrichtungen für die Hundewäsche bekannt. Diese bestehen im wesentlichen aus einem Behältnis, in welches das zu waschende Tier eingebracht wird. Nachteilig ist hierbei jedoch, daß das Tier den auf ihn einwirkenden Wasserstrahlen, Luftströmen usw. völlig ausgesetzt ist, was zu unangenehmen Reaktionen des Tieres führt.

Der Erfindung liegt daher die Aufgabe zugrunde, eine Vorrichtung der gattungsgemäßen Art zu schaffen, die von einfacher Bauart, verläßlich im Betrieb sowie einfach in der Handhabung ist und vor allen Dingen höchste Sicherheit für das zu behandelnde Tier bietet, ohne daß dieses unangenehmen Empfindungen unterworfen ist.

Diese Aufgabe wird mit der Vorrichtung gemäß der Erfindung durch die Merkmale des Anspruchs 1 gelöst. Vorteilhafte Ausgestaltungen hiervon sind in den Unteransprüchen beschrieben.

Die erfindungsgemäße Vorrichtung kann in verschiedenen Ausführungen gebaut werden, und zwar von der manuellen Haushaltsversion über die halbautomatische Version bis zur vollautomatischen Ausführung.

Wesentlich ist in allen Fällen, daß die verschiedenen Behandlungen des Tieres, insbesondere des Hundes, d.h. also das Waschen, das Trocknen, das Verabreichen von Medikamenten, das Behandeln mit Essenzen usw., bei völliger Sicherheit für das behandelnde Tier erfolgt, und zwar derart, daß sich der Tierkopf außerhalb der Vorrichtung befindet und somit in direktem beruhigendem Kontakt mit der Bedienungsperson bleiben kann.

Die erfindungsgemäße Vorrichtung ist derart ausgestaltet, daß in einem Gehäuse eine Trägerebene für das zu behandelnde Tier vorgesehen ist, die derart angeordnet ist, daß der Kopf des auf der Trägerebene stehenden Tieres aus einer stirnseitigen Öffnung des Gehäuses herausragt, und daß im Innern des Gehäuses im Abstand über der Trägerebene eine Behandlungsbrücke längsverfahrbar ist, die mit mehreren nach innen gerichteten Behandlungsdüsen verschiedener Art bestückt ist.

Hierbei liegt es im Rahmen der Erfindung, daß die Behandlungsbrücke im Abstand voneinander mehrere Waschsprühdüsen o. dgl., mehrere Warmluftdüsen o. dgl. und/oder mehrere Sprühdüsen o. dgl. zur Ausgabe von sonstigen Flüssigkeiten, wie Essenzen, Shampoo, Pflegemitteln, Medikamenten usw, aufweist.

Vorteilhafterweise erfolgt der Antrieb für die längsverfahrbare Behandlungsbrücke wenigstens über einen Antriebsgurt bzw. Treibriemen. Hierbei sind selbstverständlich auch andere geeignete Antriebseinrichtungen für die hin- und herverfahrbare Behandlungsbrücke möglich.

Zur reibungslosen Abfuhr des Abwassers u. dgl. sind zweckmäßigerweise am Boden des Gehäuses Filter sowie Abflüsse angeordnet.

Um das in der Waschvorrichtung befindliche Tier mit Sicherheit ruhig zu halten, ist vorteilhafterweise an bzw. nahe der stirnseitigen Gehäuseöffnung ein Feststellhalsband für den Kopf des Tieres vorgesehen. Dieses ist zweckmäßigerweise entsprechend der Größe des Tieres höhenverstellbar ausgestaltet.

Um auch den aus der Gehäuseöffnung herausragenden Kopf des Tieres waschen zu können, ist in erfindungsgemäßer Ausgestaltung am Gehäuse vor der stirnseitigen Gehäuseöffnung ein Waschbecken angeordnet. Diesem ist ggf. eine Handbrause zum Waschen des Tierkopfes zugeordnet.

Um zu verhindern, daß beim Betrieb der Waschvorrichtung Wasser u. dgl. aus der stirnseitigen Gehäuseöffnung austritt, kann diese stirnseitige Gehäuseöffnung durch einen den Tierkopf umgreifenden Spritzschutzkragen nach außen abgedichtet sein. Ein derartiger Spritzschutzkragen ist beispielsweise als Gummischutzrand mit Wachsleinwandkragen ausgestaltet.

Zweckmäßigerweise sind sämtliche Düsen der Behandlungsbrücke über Leitungen an entsprechende Versorgungseinrichtungen, wie Warmwasserbereiter, Warmlufterzeuger usw., angeschlossen.

Das Gehäuse kann einen aufklappbaren Deckel aufweisen, der zweckmäßigerweise aus transparentem Material besteht.

Um auch die Brust des in der Vorrichtung befindlichen Tieres säubern zu können, ist vorteilhafterweise an der die stirnseitige Öffnung aufweisenden Innenseite des Gehäuses eine Sprühdüse angeordnet.

Das Gehäuse, das vorteilhafterweise aus rostfreiem Material besteht, weist einen Tragrahmen auf, an dem der öffenbare Deckel, vorzugsweise aus transparentem Material bestehend, angelenkt ist. An der Behandlungsbrücke sind die nach innen gerichteten Behandlungsdüsen angeordnet, die einstellbar ausgebildet sind und aus Sprühdüsen für das Waschen, Sprühdüsen für Behandlungsessenzen, Sprühdüsen für die Zugabe von Medikamenten usw. bestehen. Anstelle der Sprühdüsen können auch alle geeigneten anderen Austrittsöffnungen vorgesehen sein. An der vorderen Stirnseite des Gehäuses ist innen eine einstellbare Sprühdüse für die Wäsche der Brust des Tieres vorgesehen.

Die Waschvorrichtung ist bodenseitig mit einer Schale zur Aufnahme des Abwassers versehen, die mit Filtern und Abflüssen ausgestattet ist.

Das zur Wäsche des Tieres benötigte warme Wasser wird in einem Warmwasserbereiter erzeugt, dem eine Thermostatregelung sowie eine Pumpe zugeordnet ist. Außerdem sind für die Zugabe von Shampoo, Essenzen u. dgl. weitere Behälter mit regelbarer Dosierung vorgesehen. Auch ist es möglich, die Vorrichtung mit einem Behälter mit regelbarer Dosierung für flüssige Medikamente auszustatten.

Die Trocknung des gewaschenen Tieres erfolgt über die gleichfalls an der Behandlungsbrücke vorgesehenen Warmluftdüsen, aus denen von einem Warmluftgebläse erzeugte Warmluft austritt. Die Waschsprühdüsen sind an eine Wasserleitung angeschlossen. Außerdem kann die Vorrichtung mit einer Handbrause zur Kopfwäsche des Tieres ausgestattet sein.

Zur Sicherstellung der Sauberkeit der Vorrichtung ist es möglich, einen Behälter für Desinfektionsmittel vorzusehen, aus dem mit Hilfe einer Dosierungspumpe das Desinfektionsmittel in den Innenraum gesprüht wird, und zwar beispielsweise über die Waschsprühdüsen oder auch über gesonderte Düsen.

Die Vorrichtung kann in drei Versionen hergestellt werden, und zwar nicht nur in verschiedenen Abmessungen entsprechend der Größe der zu behandelnden Tiere, sondern auch mit unterschiedlichem Arbeitsablauf sowie unterschiedlicher Steuerung, und zwar in vollautomatischer, halbautomatischer und manueller Version. Die jeweiligen Arbeitsvorgänge, die der vorerwähnten Steuerung unterliegen können, sind hierbei die Hin- und Herbewegung der Behandlungsbrücke, der Wasserzufluss, die Zugabe von Shampoo, von Essenzen, von Medikamenten usw. sowie die Warmluftzufuhr zum Trocknen des Tieres.

In der automatischen Version der Waschvorrichtung sind die vorerwähnten Arbeitsvorgänge vollständig programmiert, so daß dann, wenn das Tier einmal in der Waschvorrichtung positioniert ist, sämtliche Arbeitsvorgänge im automatisierten Modus ablaufen. Diese Version ist dann ständig an die Wasserzufuhrleitung, an die Abwasserleitung sowie an das Stromnetz angeschlossen.

In der halbautomatischen Version der Waschvorrichtung werden die Arbeitsvorgänge mit Druckschaltern von außen gesteuert. Auch für diese Version ist der Anschluß an die Wasserleitung, die Abwasserleitung sowie an das Stromnetz vorgesehen.

Demgegenüber laufen in der manuellen Version der Waschvorrichtung die Arbeitsvorgänge derart ab, daß diese von Hand gesteuert sowie durchgeführt werden. Hierbei unterliegt der Warmwasseranschluß einer manuellen Temperaturkontrolle, der Abwasseranschluß erfolgt an den Toilettenabfluß oder an andere Sanitäreinrichtungen, und das Trocknen des behandelten Tieres mit Warmluft kann mittels eines Haartrockners erfolgen, der beispielsweise an eine an der Waschvorrichtung vorgesehene Steckdose anschließbar ist.

### Die beschriebene Waschvorrichtung funktioniert folgendermaßen:

Das zu behandelnde Tier wird in die Vorrichtung geleitet und steht dann auf der für das zu behandelnde Tier vorgesehenen Trägerebene, und zwar derart, daß der Kopf des Tieres aus der stirnseitigen Gehäuseöffnung herausragt. In dieser Stellung wird das Tier mit Hilfe eines Feststellhalsbandes gehalten, das am Tragrahmen des Gehäuses, beispielsweise an vier Punkten, befestigt ist. Diese Festlegungspunkte des Feststellhalsbandes sind höhenverstellbar entsprechend der Größe des zu behandelnden Tieres. Dieses kann somit in seiner natürlichen Haltung in der Waschvorrichtung stehen.

Die stirnseitige Gehäuseöffnung, durch welche der Kopf des Tieres nach außen ragt, ist durch einen den Tierkopf umgreifenden Spritzschutzkragen nach außen abgedichtet. Dieser Spritzschutzkragen kann beispielsweise ein Gummischutzrand mit Wachsleinwandkragen sein, der zum leichten Öffnen mit Scharnieren, insbesondere mit zwei Scharnieren, versehen ist und um den Hals des Tieres gelegt wird. Hierdurch wird vermieden, daß durch austretende Spritzer während des Waschvorganges auch der Kopf des Tieres nass wird.

Wenn sich das Tier dann in der richtigen Position innerhalb der Waschvorrichtung befindet, wird die Behandlungsbrücke in Längsbewegung versetzt, die sich sodann während des durchgeführten Behandlungsvorganges entweder einmal oder aber mehrere Male in Längsrichtung über das zu behandelnde Tier hin- und herbewegt. Hierbei werden nacheinander über die entsprechenden Zuleitungen Wasser und Shampoo für die Wäsche, Wasser zum Spülen, Behandlungsessenzen und evtl. Medikamente zugegeben. Am Ende der Behandlung wird dann Warmluft zum Trocknen des Tieres über die Behandlungsbrücke zugeführt.

Wie schon erwähnt, kann die Waschvorrichtung an ihrem vorderen stirnseitigen Ende außen mit einer Handbrause ausgestattet sein, um dem Tier von Hand den aus der Vorrichtung herausragenden Kopf zu waschen.

Nach jeder Wäsche ist ein automatisierter Waschvorgang mit Desinfektion der Vorrichtung vorgesehen.

Die Vorteile der Erfindung bestehen u.a. in der höchsten Sicherheit für das zu behandelnde Tier, in einer optimalen Hygiene, die auch durch den automatischen Waschvorgang mit Desinfektion nach jedem Waschzyklus sichergestellt wird, sowie in der Einfachheit im Gebrauch in allen möglichen der erwähnten drei Versionen.

Die Erfindung wird im folgenden in Form eines Ausführungsbeispiels anhand der Zeichnung näher erläutert. Hierbei zeigen:
- Fig. 1: die Vorrichtung gemäß der Erfindung in Form einer Hundewaschvorrichtung im Längsschnitt sowie
- Fig. 2: im Querschnitt und
- Fig. 3: ein Schaltschema zur Darstellung der verschiedenen Anschlüsse an die Waschvorrichtung.

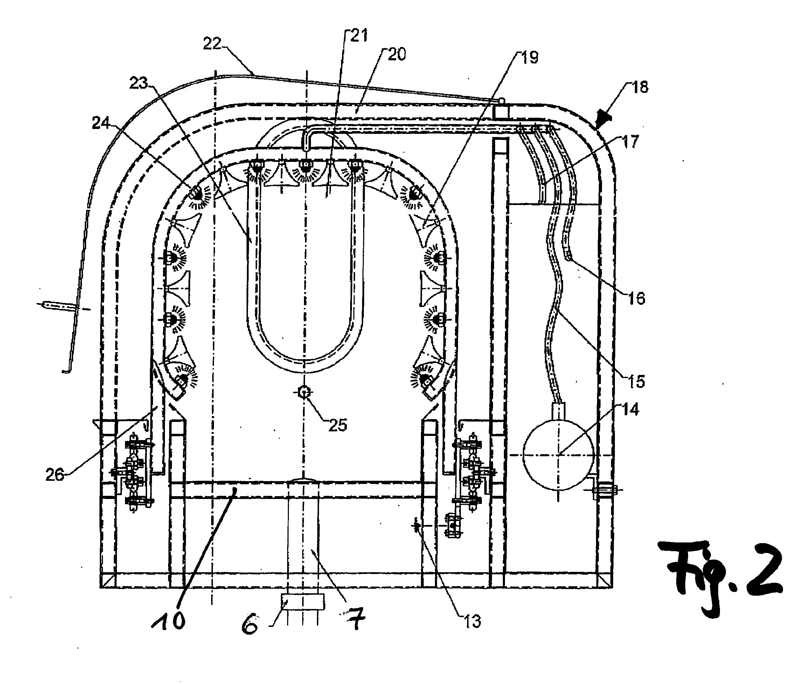

Die in der Zeichnung dargestellte Vorrichtung weist ein Gehäuse 18 aus rostfreiem Material auf, das aus einem Tragrahmen 20, beisp. aus Aluminiumprofilen, gebildet ist und oberseitig einen angelenkten Deckel 22 aus transparentem Material besitzt. Dieser Gehäusedeckel 22 ist in der aus Fig. 2 ersichtlichen Weise öffenbar und schließbar, um einem zu behandelnden Tier 11, im vorliegenden Fall einem Hund, leichten Zugang zu ermöglichen.

Im Gehäuse 18 ist eine Trägerebene 10 für das zu behandelnde Tier 11 vorgesehen. Hierbei ist die Trägerebene 10 innerhalb des Gehäuses 18 derart angeordnet, daß dann, wenn das Tier 11 auf der Trägerebene steht, der Kopf 12 des Tieres 11 aus einer stirnseitigen Öffnung 21 des Gehäuses 18 herausragt.

Zum Festlegen des Tierkopfes 12 ist an der Außenseite des Gehäuses 18 ein Feststellhalsband 1 vorgesehen, das beispielsweise an vier Punkten befestigt ist und entsprechend der Größe des Tieres 11 in der Höhe verstellbar ist.

Unterhalb des Tierkopfes 12 ist an der Außenseite des Gehäuses in entsprechender Lage ein Waschbecken 5 angeordnet, dem eine nicht näher dargestellte Handbrause zur Kopfwäsche des Tieres 11 zugeordnet ist. Der Boden des Gehäuses 18 ist als Auffangschale für Abwasser usw. ausgebildet, die einen vorderen Filter 6 sowie einen vorderen Abwasserabfluß 7 und einen hinteren Filter 8 sowie einen hinteren Abwasserabfluß 9 aufweist.

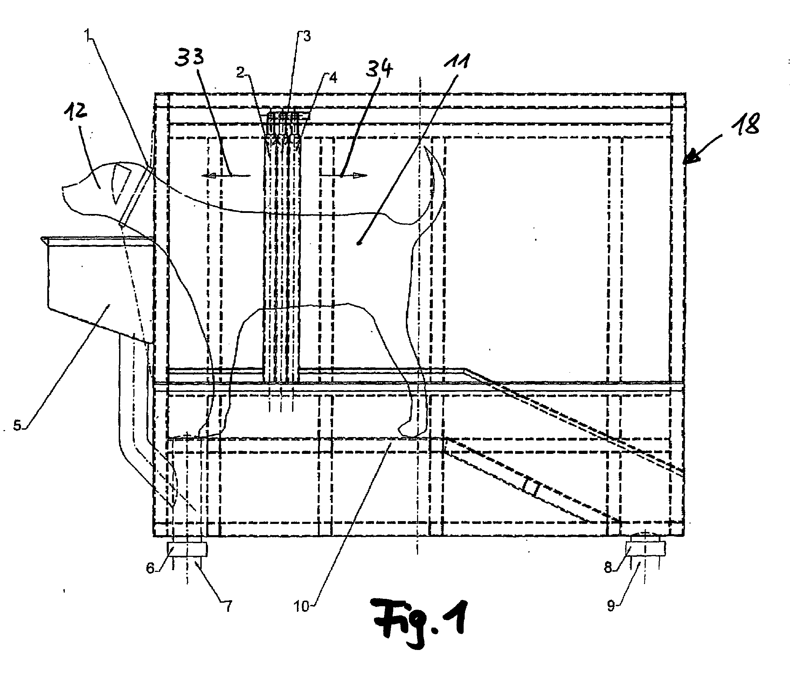

Im Innern des Gehäuses 18 ist im Abstand über der Trägerebene 10 eine Behandlungsbrücke 26 vorgesehen, die in Richtung der Pfeile 33, 34 gemäß Fig. 1 längsverfahrbar ist, und zwar mittels eines in Fig. 2 angedeuteten Antriebes 13 in Form eines Antriebsgurtes, Treibriemens o. dgl.

Wie aus Fig. 1 ersichtlich, sind an der Behandlungsbrücke 26 ein Verteilerrohr 2 für Essenzen usw., ein Zuleitungs- bzw. Verteilerrohr 3 für Waschwasser, Shampoo, Desinfektionsmittel usw. sowie ein Verteilerrohr 4 für Warmluft zum Trocknen des behandelten Tieres 11 vorgesehen.

Die Behandlungsbrücke 26 ist mit mehreren nach innen gerichteten Behandlungsdüsen verschiedener Art bestückt, und zwar mit jeweils im Abstand voneinander angeordneten Waschsprühdüsen 24 sowie mit Warmluftdüsen 19. Diese Düsen werden jeweils über vorzugsweise flexible Zuleitungen mit dem betreffenden Behandlungsmittel versorgt, und zwar über eine Zuleitung 15 zur Wasser-, Shampoound Desinfektionsmittelversorgung, über eine Leitung 16 zur Zufuhr von Warmluft sowie über eine Leitung 17 zur Zugabe von Behandlungsessenzen.

Die stirnseitige Gehäuseöffnung 21, durch welche der Kopf 12 des zu behandelnden Tieres nach außen ragt, ist durch einen den Tierkopf 12 umgreifenden Spritzschutzkragen 23 nach außen abgedichtet. Dieser Spritzschutzkragen 23 besteht beim dargestellten Ausführungsbeispiel aus einem Gummischutzrand mit Wachsleinwandkragen.

An der die Gehäuseöffnung 21 aufweisenden Stirnseite des Gehäuses 18 ist innenseitig eine weitere Sprühdüse 25 zur Brustwäsche des Tieres 11 angebracht.

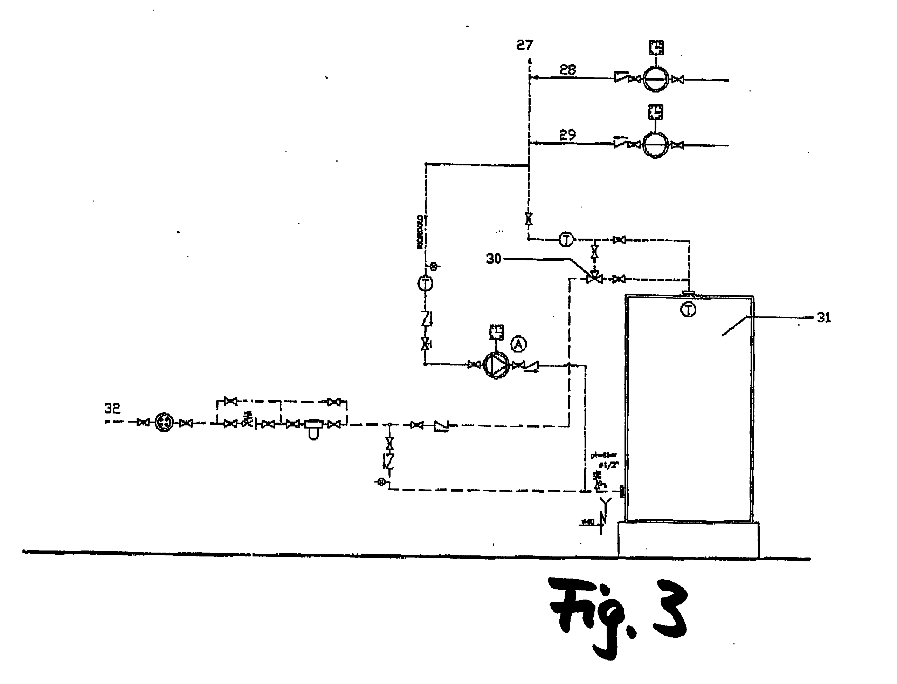

Wie aus Fig. 3 ersichtlich, erfolgt der Anschluß der Behandlungsmittel an die längsverfahrbare Behandlungsbrücke 26 über eine Leitung 27. An diese sind ihrerseits eine Leitung 28 zur Zugabe von Essenzen mittels einer Dosierungspumpe sowie eine Leitung 29 zur Zugabe von Shampoo, gleichfalls mittels einer Dosierungspumpe, angeschlossen. Mit der Anschlußleitung 27 ist gleichfalls über einen thermostatgesteuerten Mischer 30 ein Warmwasserbereiter 31 verbunden, der den Warmwasserbereiter 14 gemäß Fig. 2 versorgt.

Schließlich ist ein Wasseranschluß 32 vorgesehen, der den Warmwasserbereiter 31 mit Wasser versorgt.

## Patentansprüche

1. Vorrichtung zur Behandlung von Tieren, insbesondere von Hunden, insbesondere zum Waschen, zum Trocknen, zum Verabreichen von Essenzen, Medikamenten u. dgl.,
**dadurch gekennzeichnet,**
**daß** in einem Gehäuse (18) eine Trägerebene (10) für das zu behandelnde Tier (11) vorgesehen ist, die derart angeordnet ist, daß der Kopf (12) des auf der Trägerebene (10) stehenden Tieres (11) aus einer stirnseitigen Öffnung (21) des Gehäuses (18) herausragt, und
**daß** im Innern des Gehäuses (18) im Abstand über der Trägerebene (10) eine Behandlungsbrücke (26) längsverfahrbar ist, die mit mehreren nach innen gerichteten Behandlungsdüsen (24, 19) verschiedener Art bestückt ist.

2. Vorrichtung nach Anspruch 1, **dadurch gekennzeichnet, daß** die Behandlungsbrücke (26) im Abstand voneinander mehrere Waschsprühdüsen (24) o. dgl. aufweist.

3. Vorrichtung nach Anspruch 1 oder 2, **dadurch gekennzeichnet, daß** die Behandlungsbrücke (26) im Abstand voneinander mehrere Warmluftdüsen (19) o. dgl. aufweist.

4. Vorrichtung nach einem der vorhergehenden Ansprüche, **dadurch gekennzeichnet, daß** die Behandlungsbrücke (26) im Abstand voneinander mehrere Sprühdüsen (24) o. dgl. zur Ausgabe von sonstigen Flüssigkeiten, wie Essenzen, Shampoo, Pflegemitteln, ten, wie Essenzen, Shampoo, Pflegemitteln, Medikamenten u. dgl. aufweist.

5. Vorrichtung nach einem der vorhergehenden Ansprüche, **dadurch gekennzeichnet, daß** der Antrieb für die längsverfahrbare Behandlungsbrücke (26) wenigstens einen Antriebsgurt (13) bzw. einen Treibriemen aufweist.

6. Vorrichtung nach einem der vorhergehenden Ansprüche, **dadurch gekennzeichnet, daß** am Boden des Gehäuses (18) Filter (6, 8) sowie Abflüsse (7, 9) für das Abwasser u. dgl. angeordnet sind.

7. Vorrichtung nach einem der vorhergehenden Ansprüche, **dadurch gekennzeichnet, daß** an bzw. nahe der stirnseitigen Gehäuseöffnung (21) ein Feststellhalsband (1) für den Kopf (12) des Tieres (11) vorgesehen ist.

8. Vorrichtung nach Anspruch 7, **dadurch gekennzeichnet, daß** das Feststellhalsband (1) entsprechend der Größe des Tieres (11) höhenverstellbar ist.

9. Vorrichtung nach einem der vorhergehenden Ansprüche, **dadurch gekennzeichnet, daß** am Gehäuse (18) vor der stirnseitigen Gehäuseöffnung (21) ein Waschbecken (5), ggf. mit einer Handbrause, zur Kopfwäsche des Tieres (11) angeordnet ist.

10. Vorrichtung nach einem der vorhergehenden Ansprüche, **dadurch gekennzeichnet, daß** die stirnseitige Gehäuseöffnung (21) durch einen den Tierkopf (12) umgreifenden Spritzschutzkragen (23) nach außen abgedichtet ist.

11. Vorrichtung nach einem der vorhergehenden Ansprüche, **dadurch gekennzeichnet, daß** sämtliche Düsen (24, 19) der Behandlungsbrücke (26) über Leitungen (15, 16, 17) an Versorgungseinrichtungen, wie Warmwasserbereiter (14, 31), Warmlufterzeuger usw. angeschlossen sind.

12. Vorrichtung nach einem der vorhergehenden Ansprüche, **dadurch gekennzeichnet, daß** das Gehäuse (18) einen, vorzugsweise transparenten, Deckel (22) aufweist, der öffenbar ist.

13. Vorrichtung nach einem der vorhergehenden Ansprüche, **dadurch gekennzeichnet, daß** an der die stirnseitige Öffnung (21) aufweisenden Innenseite des Gehäuses (18) eine Sprühdüse (25) zur Brustwäsche des Tieres (11) angeordnet ist.
